(19) Europäisches Patentamt
European Patent Office
Office européen des brevets

(11) EP 2 983 474 B1

(12) **EUROPEAN PATENT SPECIFICATION**

(45) Date of publication and mention of the grant of the patent:
**19.09.2018 Bulletin 2018/38**

(21) Application number: **14782678.8**

(22) Date of filing: **02.04.2014**

(51) Int Cl.:
***A01N 43/80*** (2006.01) ***A01N 25/28*** (2006.01)
***B01J 13/14*** (2006.01) ***A01P 13/00*** (2006.01)
***B01J 13/16*** (2006.01)

(86) International application number:
**PCT/CN2014/074588**

(87) International publication number:
**WO 2014/166347 (16.10.2014 Gazette 2014/42)**

(54) **HERBICIDE COMPOSITION COMPRISING CLOMAZONE AND USE**

HERBIZIDZUSAMMENSETZUNG MIT CLOMAZON UND VERWENDUNG DAVON

COMPOSITION HERBICIDE COMPRENANT DU CLOMAZONE ET UTILISATION ASSOCIÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.04.2013 GB 201306655**

(43) Date of publication of application:
**17.02.2016 Bulletin 2016/07**

(73) Proprietor: **Rotam Agrochem International Company Limited**
**Hong Kong (HK)**

(72) Inventor: **BRISTOW, James Timothy**
**Chai Wan**
**Hong Kong (CN)**

(74) Representative: **Akers, Noel James**
**N.J. Akers & Co**
**63 Lemon Street**
**Truro, Cornwall TR1 2PN (GB)**

(56) References cited:
**EP-A1- 1 840 145** **EP-A1- 1 840 145**
**GB-A- 2 497 901** **US-A- 5 783 520**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 983 474 B1

## Description

The present invention concerns an improved herbicide composition comprising clomazone, in particular a composition comprising microcapsules of clomazone contained within an encapsulating polymer skin material.

Clomazone (2-[(2-chlorophenyl)methyl]-4,4-dimethyl-3-isoxazolidinone) is a well-known herbicide commercially available for controlling many broadleaf and most grass weeds. Clomazone has been found to have selective characteristics making it particularly useful for the control of weeds when growing crops of soybean, cotton, sugarcane, rice, tobacco, oilseed rape, vegetables and others. However, clomazone can be phytotoxic to some non-targeted crops and naturally occurring plant species when applied to control undesired vegetation. Contact of clomazone with such unintended crops is the result of vapor transfer of the clomazone to sensitive species growing in areas adjacent to the targeted areas.

Although clomazone can be, and is, sold with suitable label instructions to prevent exposure to sensitive crops, measures that will further decrease the exposure of the non-targeted crops to clomazone without substantial diminution of herbicidal efficacy against weeds will greatly expand the usefulness of clomazone and thus result in lower overall costs.

It is known to provide formulations in which clomazone is encapsulated in microcapsules, to address the problems arising from the high volatility of clomazone and the effects of vapor transfer at the time of application to a target locus. Microencapsulated formulations of clomazone exist that are intended to control the volatile nature of the herbicide. Such formulations are disclosed, for example, in US 5,597,780, US 5,583,090, and US 5,783,520. Unfortunately, these formulations do not provide optimum herbicidal efficacy when compared to commercially available clomazone formulations, such as the 4 pound/gallon emulsifiable concentrate (4.0EC) formulation.

Given the commercial value of clomazone, improved formulations are therefore needed.

The microencapsulation of agrochemically active components is described in EP 1 840 145, in particular the microencapsulation and formulation of clomazone. The microencapsulation process disclosed in EP 1 840 145 comprises forming an oil phase comprising an aliphatic isocyanate monomer, for example tetramethyl-m-xylylene diisocyanate (TMXDI), an aromatic isocyanate prepolymer, for example polymethylene polyphenyl isocyanate (PAPI), an acetylene carbamide monomer, for example tetra-butoxymethyl acetylene carbamide, an active ingredient, one or more solvents and other components, such as antioxidants and the like. The oil phase is dispersed in an aqueous phase, to form an emulsion. The aqueous phase comprises water, with one or more surfactants, one or more water soluble polymers, such as polyvinylpyrrolidone, one or more gums and the like. Polymerisation of the isocyanate and acetylene carbamide components is induced by heating the dispersion, whereby a polymer shell is formed at the interface of the dispersed organic phase and the aqueous phase.

An improved formulation for the microencapsulation of compounds, such as clomazone has now been found.

The present invention provides an improved herbicide composition comprising clomazone contained within an encapsulating polymer skin material comprising a cross-linked polyacetylene carbamide-polyurea.

Clomazone is well-known to be a highly toxic herbicide. As noted above, one of the disadvantages of the use of clomazone as herbicide is its high volatility in the field. Accordingly, in known methods of application, clomazone is pesticidally effective in the field for a period of only several days. Another major disadvantage of known methods of using clomazone as a herbicide is the danger to wildlife, domestic animals, and humans resulting from the toxicity of clomazone, especially to mammals.

In contrast, the reduced toxicity of the encapsulated clomazone of the present invention to the environment is significant. Specifically, the toxicity of clomazone encapsulated according to the present invention is significantly reduced, for example only one-tenth that of the unencapsulated clomazone, while the toxicity of encapsulated clomazone to crops can be as low as one-hundredth that of the unencapsulated clomazone composition. It is thus a surprising aspect of this invention that, although the microencapsulated clomazone is significantly less toxic to crops than the unencapsulated clomazone, the encapsulated clomazone is more effective as a herbicide than the unencapsulated material, showing a more effective kill at smaller concentrations, in addition to killing weeds for an increased period of time in the field. For example, the efficacy of the composition of the present invention may be up to eight days or more at dosage concentrations of 0.25 to 1 Ib/acre of the clomazone, compared with only about one day of effectiveness at concentrations of 1 Ib/acre for unencapsulated clomazone formulations. The encapsulated clomazone thus gives a more effective plant control than the unencapsulated material at equivalent concentrations.

According to a first aspect of the present invention, there is provided a composition comprising clomazone encapsulated within microcapsules having a polymer wall comprising a polyacetylene carbamide-polyurea; wherein the microcapsules are formed by interfacial polymerization reaction between a water immiscible organic phase comprising clomazone, one or more polyfunctional isocyanates and a cross-linking resin, and an aqueous phase comprising one or more polyfunctional amines.

The microcapsules of the present invention have a polymer wall of a polyacetylene carbamide-polyurea polymer. The polyacetylene carbamide-polyurea polymer is formed interfacial polymerization occurring at the interface of a dispersed organic phase and a continuous aqueous phase.

The polyacetylene carbamide-polyurea polymer is formed by the reaction of an isocyanate, in particular a polyfunctional isocyanate, a cross-linking resin and a polyfunctional amine. The microcapsules are formed by interfacial polymerization reaction. In particular, a water immiscible organic phase is provided comprising clomazone, one or more polyfunctional isocyanates and a cross-linking resin. An aqueous phase is provided comprising one or more polyfunctional amines. The organic phase is dispersed in known manner in the aqueous phase, as a result of which formation of the polyacetylene carbamide-polyurea polymer occurs at the interface of the dispersed organic phase and the aqueous phase. It is an advantage of the present invention that the mixture of components, once dispersed, does not need to be heated to induce the interfacial polymerization reactions.

One or more surfactants and/or stabilizers may be included in the mixture, as required, as described hereinafter.

Accordingly, in a further aspect, the present invention provides a method of preparing a microencapsulated clomazone composition, the method comprising:

providing a water imiscible organic phase comprising clomazone, one or more polyfunctional isocyanates and a cross-linking resin;
providing an aqueous phase comprising one or more polyfunctional amines;
dispersing the organic phase in the aqueous phase to form a dispersion of droplets of the organic phase in the aqueous; and
allowing the formation of a polyacetylene carbamide-polyurea polymer at the interface of the dispersed organic phase and the aqueous phase.

A polymerization method and technique of preparing microcapsules that may be employed in the present invention are described in US 3,577,515. Described in this document is a process of encapsulation by interfacial condensation of complementary, organic, polycondensate-forming intermediates which react to form cross-linked, polyacetylene carbamide-polyurea polycondensate. The process comprises: establishing, by agitation, a dispersion of to-be-encapsulated droplets containing a first of said intermediates in a body of liquid which is in continuous phase and is immiscible with the droplets and is essentially free of any reactant complementary to said first intermediate. Thereafter a second of said intermediates, complementary to the first intermediate, is introduced into the continuous liquid phase so that the first and second intermediates react at the interfaces between the droplets and the continuous phase to encapsulate the droplets with a skin of the polycondensate. At least one of said first and second intermediates comprises at least in part a polyfunctional reactant which: (a) is complementary to and effective for cross-linking with the other of said first and second intermediates and (b) has at least three reactive groups that are the same as each other and are effectively functional in said polycondensate-forming reaction, and that are selected from an amine, an isocyanate, and an acetylene carbamide derivative.

The microcapsules of the present invention are formed by the reaction of a polyfunctional isocyanate. Suitable polyfunctional isocyanates have two or more isocyanate groups. Examples of compounds providing reactive isocyanate groups include para-phenylene diisocyanate, meta-phenylene diisocyanate, naphthalene-1,5-diisocyanate, tetrachloro-m-phenylene diisocyanate, 2,4-toluene diisocyanate, 2,6-toluene diisocyanate, 4,4-diphenyl diisocyanate, the dichloro diphenyl methane diisocyanates, bibenzyl diisocyanate, bitolylene diisocyanate, the diphenyl ether diisocyanates, the dimethyldiphenyl diisocyanates, the polymethylene polyphenyl isocyanates, triphenylmethane-4,4',4"-triisocyanate, isopropylbenzene $\alpha$-diisocyanate and the like.

The microcapsules of the present invention are further formed from a polyfunctional amine. Suitable amines for use have two or amine groups. Examples of suitable amines for use in the present invention are diamine and higher polyamine reactants, including ethylene diamine, phenylene diamine, toluene diamine, hexamethylene diamine, diethylene triamine, piperazine, 1,3,5-benzenetriamine trihydrochloride, 2,4,6-triaminotoluene trihydrochloride, tetraethylene pentamine, pentaethylene hexamine, polyethylene imine, 1,3,6-triaminonaphthlene, 3,4,5-triamino-1,2,4-triazole, melamine, and 1,4,5,8-tetraminoanthraquinone.

The microcapsules of the present invention are formed to have a shell of a cross-linked polyacetylene carbamide-polyurea polymer. The cross-linking of the polymer is provided by inclusion in the reaction process a cross-linking resin. A suitable cross-linking resin is a glycoluril resin.

The glycoluril resin may be generated from the condensation reaction of glycoluril and an aldehyde. Suitable aldehydes are known in the art and include, for example, formaldehyde, paraformaldehyde, acetaldehyde, butyraldehyde, paraldehyde, glyoxal, furfuraldehyde, propinonaldehyde, benzaldehyde, and mixtures thereof. Preferred embodiments of the present invention are those that employ a glycoluril resin prepared from formaldehyde, acetaldehyde, and butyraldehyde.

Examples of suitable glycoluril resins suitable for use in the present invention include highly alkylated/alkoxylated, partially alkylated/alkoxylated, or mixed alkylated/alkoxylated glycoluril resins. More specifically, the glycoluril resin may be methylated, n-butylated, or isobutylated.

Alkoxylated glycoluril resins suitable for use in the present invention are known in the art, for example from US

2011/026903, and may be represented by the following formula (I):

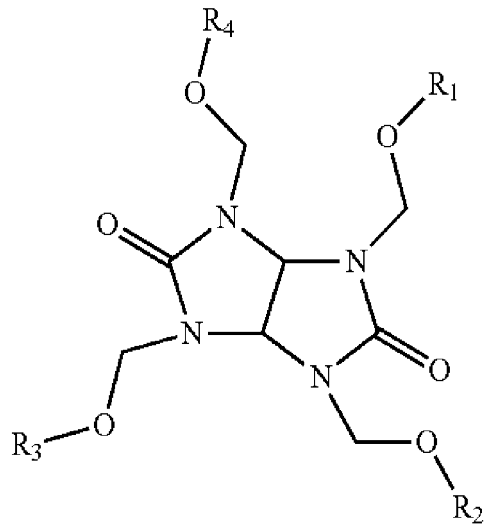

wherein $R_1$, $R_2$, $R_3$, and $R_4$ each independently represents a hydrogen atom or an alkyl group. Preferred compounds of Formula (I) in which $R_1$, $R_2$, $R_3$, and $R_4$ each independently represents an alkyl group are those in which the alkyl group has from 1 to 12 carbon atoms, more preferably from 1 to 8 carbon atoms, still more preferably from 1 to 6 carbon atoms, most preferably from 1 to 4 carbon atoms. $R_1$, $R_2$, $R_3$, and $R_4$ may reach represent the same or different alkyl groups. The alkyl groups may be straight chain or branched.

Specific examples of commercially available glycoluril resins include CYMEL® 1170, 1171 and 1172. CYMEL® glycoluril resins are commercially available from CYTEC Industries, Inc.

The substantially fully mixed-alkylated acetylene carbamide derivatives and substantially fully methylolated acetylene carbamide derivatives are a new class of cross-linking agents, the starting material of which is acetylene carbamide, also known as acetylene diurea or glycoluril. Acetylene carbamide is prepared by reacting two moles of urea with one mole of glyoxal. The precise chemical name for acetylene carbamide is tetrahydroimidazo-(4, 5-d) imidazole 2, 5(1H, 3H)-dione. Acetylene carbamide may be fully methylolated by reacting one mole of acetylene carbamide with four moles of formaldehyde. The resulting product is identified as tetramethylol acetylene carbamide. Tetramethylol acetylene carbamide may then be reacted with a selected amount of methanol so as to partially methylate the fully methylolated acetylene carbamide, which procedure may then be followed by alkylation with a higher aliphatic monohydric alcohol, for example containing from 2 to 4 carbon atoms. The monohydric alcohols may be primary or secondary alcohols. Examples of suitable higher monohydric aliphatic alcohols include ethanol, n-propanol, isopropanol, n-butanol, isobutanol and the like. It may be advantageous to fully methylate the tetramethylol acetylene carbamide and then, by use of a transetherification reaction, incorporate the desired measure of ethanol, propanol or butanol into the acetylene carbamide derivative.

The fully etherified, fully methylolated acetylene carbamide derivatives are not generally considered to be resinous materials since they are, as individual entities, simple pure compounds or mixtures of simple pure compounds. However, they are potentially resin-forming compounds, which react with certain ionic water-dispersible, non-gelled polymeric materials when subjected to heat, more particularly when subjected to heat under acidic conditions.

The concept of the average degree of methylation, or more broadly alkylation, and the concept of the average degree of methylolation will be discussed hereinbelow in order that this concept may be fully understood.

Theoretically, it is possible to methylolate acetylene carbamide fully, that is, to produce tetramethylol acetylene carbamide. However, frequently, analysis of a commercial composition purporting to be tetramethylol acetylene carbamide shows a fractional degree of methylolation, that is an average degree of methylolation of less that 4.0. It is well recognized that fractional methylolation of a given molecule is not considered possible. As a consequence, when a composition displays on analysis a degree of methylolation of 3.70, 3.80, or 3.90, it has to be recognized that this is an average degree of methylolation of the acetylene carbamide compound and indicates that the aforementioned methylol composition is composed of a mixture of a major amount of tetramethylol acetylene carbamide with minor amounts of trimethylol acetylene carbamide and, perhaps, lesser amounts, including traces, of such derivatives as dimethylol acetylene carbamide and/or monomethylol acetylene carbamide. The same concept of averages is also applicable to the alkylation or etherification of the tetramethylol acetylene carbamide composition. As a consequence, when analysis of a given composition shows that the degree of methylation, for example, is, on average, between about 0.9 and 3.60 and that the higher alkylation has an average degree of ethylation, propylation and/or butylation, between about 2.80 and

0.40, it must be concluded that there is present in such a composition a plurality of the mixed ethers of the tetramethylol acetylene carbamide. For example, the composition may contain monomethyl ether, triethyl ether of tetramethylol acetylene carbamide; dimethyl ether, diethyl ether of tetramethylol acetylene carbamide; or trimethyl ether, monoethyl ether of tetramethylol acetylene carbamide. There may also be traces of the tetramethyl ether of tetramethylol acetylene carbamide present. There may also be present with the varying methyl ethers of tetramethylol acetylene carbamide varying mono, di and tri ethyl ethers, mono, di and tri propyl ethers and mono, di and tri butyl ethers of tetramethylol acetylene carbamide. It is possible to produce a monomethyl ether, monoethyl ether, monopropyl ether, monobutyl ether of tetramethylol acetylene carbamide which could be classed as a tetramixed-alkylated derivative. It is generally preferred, however, to make use of only one higher monohydric alcohol containing from 2 to 4 carbon atoms with the methyl alcohol in making a mixed full ether of the tetramethylol acetylene carbamide. The dimixed-alkylated products are therefore preferred. However, the trimixed-alkylated derivatives as well as the tetramixed-alkylated derivatives may also be employed.

The multi-phase reaction mixture used to prepare the microcapsules in the present invention comprises a polyfunctional isocyanate and a polyfunctional amine, in addition to the cross-linking resin. The degree of cross-linking of the polymer wall may be controlled, inter alia, by selection of the polyfunctional reactants. Sufficient polyfunctional reactant, is provided in the reaction mixture to produce microcapsules wherein the polyacetylene carbamide-polyurea capsule wall is from 5 to 60% cross-linked, more preferably 10 to 50% cross-linked, that is, from 5 to 60%, more preferably from 10 to 50% of the polymer is part of a three dimensional polymer network. In more preferred embodiments the polyacetylene carbamide-polyurea capsule wall is from 20 to 30% cross-linked. Microcapsules of polyamides with no cross linking would be made up of strands of linear polymer molecules not connected to each other. By cross-linking the polyamide, these strands are linked together at various spots along their length making a much tighter network.

The microcapsules may have any suitable particle size. The average particle size of the microcapsules will generally range from about 30 to about 130 microns, preferably from 40 to 120 microns, more preferably from 50 to 110 microns, with a preferred average particle size of about 80 to 100 microns. Such relatively fine particles are advantageous to prevent plugging of orifices in the spraying equipment used for field application of the pesticide compositions.

The wall thickness of the microcapsules may be selected according to the intended use of the composition. The wall thickness of the cross-linked, polyacetylene carbamide-polyurea capsule preferably ranges from about 0.5 micron to 4 microns, with from about 1 to 3 microns thickness preferred. The thickness of the capsule wall, as well as the degree of crosslinking of the polymer constituting same, will affect the rate of diffusion of the active ingredient therethrough, and thereby influence the performance of the composition in the field. The microcapsule size may be controlled during the manufacturing process by controlling the degree of dispersion of the material to be encapsulated and the water-immiscible phase in the aqueous phase. This may be achieved, for example, by controlling the degree of agitation of the multi-phase mixture and the number, type and amount of emulsifying agents present in the continuous phase. The microcapsule wall thickness may be further controlled by the quantity of the reactive intermediate present in the water-immiscible phase to be encapsulated.

The multi-phase reaction mixture may contain other components, as required, for example to provide microcapsules of the required size and/or to facilitate other aspects of the process. For example, the aqueous phase may comprise one or more surfactants. Suitable surface active agents are known in the art and include the sodium salt of alkylnaphthalene sulfonic acid, the potassium salt of alkylnaphthalene sulfonic acid, salts of polystyrenesulfonic acid, in particular, the alkali metal, alkaline earth metal and ammonium salts thereof, and salts of condensates of naphthalenesulfonic acids, and mixtures thereof. The dispersant system for the microencapsulation process may also optionally contain one or more non-ionic surfactant, non-ionic protective colloid, or a cationic component. Lignosulfonates are a particularly preferred surfactant for use in the process, in particular sodium lignosulfonate.

To stabilize the emulsion of the multi-phase reaction mixture, an emulsifier may be included. Suitable emulsifiers are known in the art and are commercially available. One preferred emulsifier is a polyvinyl alcohol.

The condensation reaction produces hydrochloric acid as a by-product. It is preferred, therefore, to include a neutralizing agent in the multi-phase reaction mixture. Suitable neutralizing agents include hydroxides and carbonates, in particular alkali metal salts thereof. Sodium carbonate is a particularly suitable neutralizing agent.

Other components that may be included in the multi-phase reaction mixture include one or more stablizers. Suitable stabilizers are known in the art and include clays.

The mixture may also comprise a wetting agent. Again, suitable wetting agents are known in the art.

It may also be preferred to include in the reaction mixture a neutralizing agent, in particular to control the pH and prevent the formation of acidic conditions which may arise as a result of the condensation reactions. Suitable neutralizing agents are known in the art and include carbonates, in particular metal carbonates, such as Group I metal carbonates, for example sodium carbonate.

An exemplary recipe for preparing the cross-linked polyacetylene carbamide-polyurea encapsulating polymer wall for clomazone is as follows:

polyfunctional isocyanate (such as polymethylene polyphenylisocyanate known as "PAPI"): x moles, where x is from 0.1 to 0.5;

acetylene carbamide derivative (such as tetrakis(methyoxymethyl)glycoluril; commercially available as the product Powderlink 1174): 1 - x moles;

diethylene triamine (a trifunctional polyamine): y moles, where y = 0 to 1.5;

difunctional amine (such as ethylene diamine): n-y moles, where n equals 1 to 3;

sodium carbonate; 1 - x moles to neutralize the hydrochloric acid generated during the polycondensation reaction.

Excess amine may be present in the reaction mixture.

The water-immiscible phase may comprise a solvent. However, it is preferred that the active ingredient, according to the invention clomazone, acts as a water-insoluble organic solvent for the components to be present in the organic phase, in particular the cross-linking resin and the isocyanate.

The water-immiscible phase is dispersed in water and the amine is charged to the reaction as an aqueous solution. The procedure of US 3,577,515 may then be employed to produce the microencapsulated product.

The weight ratio of the active ingredient to the polymer in the microencapsulated composition may be any suitable ratio. Preferably, the weight ratio of the active ingredient, in particular clomazone, to the polymer in the microcapsules is in the range of from about 2:1 to 10:1, more preferably from 3:1 to 8:1, still more preferably 4:1 to 7:1, with a ratio of about 5:1 being particularly preferred.

The microcapsules once prepared may be formulated in any suitable manner. Suitable formulations and formulating techniques for such microcapsules are known in the art. A suspension or slurry of the microcapsules in a suitable diluent, most preferably water, is one preferred embodiment for shipping, storing, and ultimately dispensing the composition to the area to be treated. Conventional spraying apparatus is used for application of these formulations.

The aqueous suspension may have included therein suspending agents, for example, cross-linked acrylic acid interpolymers, as discussed in US 3,426,004, other suspending agents, such as hydroxyethyl cellulose, gums, clays, sub-micron size silica and other inorganic materials; wetting agents and dispersants such as detergents, polyvinyl alcohols, gelatin, methyl cellulose, casein and clays. Further, the formulation may comprise so-called "stickers", that is materials which will cause the capsules to stick onto the foliage of the treated plants and not drop to the ground, such as gelatin, bentonites, gums, polysulfides, polyacrylic acid, and both petroleum and animal oils.

The formulation may be applied directly to the target area. Alternatively, the composition may be further diluted, prior art application. For example, a convenient water dispersion, suspension or slurry for shipping and storage will consist of from about 10 to 30% by weight of microcapsules, more preferably about 25%, of the pesticide-containing microcapsules, which will be diluted with water to about 1% by weight for spraying.

It has been found that the formulations of the present invention exhibit a high level of stability when being shipped and stored.

The compositions of the present invention may be used to control unwanted plant growth at a locus.

Accordingly, in a further aspect, the present invention provides a method of controlling plant growth at a locus, the method comprising applying to the locus a composition as described hereinbefore.

The present invention further provides the use of the compositions described hereinbefore in the control of plant growth.

The compositions may be applied to the area where control of plant growth is desired, prior to or after emergence of the target plants, for exmaple by spraying onto the surface of the soil or onto the foliage of the plants. The user may, if desired, blend the formulation into the upper layer of soil by cultivation.

As noted above, the compositions of the present invention are particularly suitable for the formulation of clomazone. Clomazone may be formulated and/or applied together with other compatible active ingredients, including herbicides, insecticides, fungicides, nematocide, plant growth regulators, safeners, fertilizers, and other agricultural chemicals. Acetochlor, alachlor and metolachlor are preferred herbicides for forming mixtures with clomazone.

In applying the other active compounds with the formulation of this invention, whether formulated alone or with other agricultural chemicals, an effective amount of each active ingredient is employed. The amount constituting an effective amount is variable, depending on the ratio of added ingredients to clomazone and other factors, such as the type of soil, the expected pattern of rainfall or irrigation, the plant species to be controlled, and the crop, if any, to be grown.

Generally, a uniform application of from about 0.01 to about 2.0 kilogram per hectare of clomazone will be employed, more preferably about 0.3 to about 1.5 kilogram per hectare. Generally, the rate of application of clomazone in the field will be about two to four times that in the greenhouse.

The present invention is further described, for illustrative purposes, by way of the following examples.

EXAMPLE 1

This example demonstrates the preparation of certain acetylene carbamide derivatives that may be used in forming the microcapsules of the present invention. Amounts indicated are by weight, unless otherwise stated.

Preparation of acetylene carbamide

Into a suitable reaction vessel equipped with stirrer, thermometer and reflux condenser, there was introduced 765 parts of urea and 875 parts of water. To this slurry, 282 parts of concentrated sulfuric acid was charged and the mixture was heated to 70° C. At 70° C, 605 parts of glyoxal (40% aqueous solution and free from formaldehyde) were added slowly to the clear solution such that the reaction temperature was maintained between 75° - 80° C. After the addition of the glyoxal, the reaction mixture was held at 75° C. for one hour and then cooled. The separated crystalline acetylene carbamide was filtered and washed with water and with a dilute aqueous caustic solution.

The acetylene carbamide obtained after drying had a melting point of 298° - 300° C and the yield was 88% (525 parts).

Preparation of Tetramethylol acetylene carbamide

Into a suitable reaction vessel equipped with a stirrer, thermometer and reflux condenser, there was introduced 688 parts (10 mol) of aqueous formaldehyde (44%), and the pH was adjusted to 8.7 with 22 parts of 0.5 N NaOH solution. To this solution, there was added 284 parts (2 mol) of acetylene carbamide at 40° C. During the resulting reaction, the temperature was allowed to rise up to 55° C. At this stage, most of the acetylene carbamide entered into solution. After about 15 minutes, the pH was adjusted to 8.0 with five parts of 0.5 N NaOH. A clear, pale yellow colored solution was obtained. The clear solution was distilled at 50° C., under reduced pressure, to remove water until the reaction vessel content was about 640 parts. The resulting syrup in the vessel was poured into 800 parts of methanol. The resulting white crystalline precipitate was filtered and dried.

The total yield of the tetramethylol acetylene carbamide was 483 parts (92%) and had a melting point of 132° - 136° C.

Preparation of Dimethoxymethyl Diethoxymethyl acetylene carbamide

Into a suitable reaction vessel, equipped as before, there was charged 320 parts (10 mol) of methanol, 460 parts of ethanol (10 mol), and 20 parts of 70% concentrated nitric acid. To this acidic alcoholic mixture, there was charged 262 parts (1 mol) of tetramethylol acetylene carbamide and the reaction mixture was heated to 40° C., with stirring. After about 20 minutes, all of the tetramethylol acetylene carbamide had gone into solution. When the reaction mixture became clear, it was cooled to 22° C. and 45 parts of 20% sodium hydroxide solution were added to neutralize the reaction mixture to a pH of 7-8. The neutralized clear solution was heated slowly to 105°C. under reduced pressure to remove substantially all of the alcohol-water mixture. The resultant syrup was filtered hot at 80° C. to remove the inorganic salts and other impurities.

The yield of the syrupy dimethoxymethyl diethoxymethyl acetylene carbamide was 320 parts. The structure of this product was confirmed by nuclear magnetic resonance spectroscopy. The pan solids were 95.0% and the foil solids were 98.5%. The Gardner-Holdt viscosity was $Z_3$ - $Z_4$ (at 25° C.). The product was soluble in water as well as in benzene.

Preparation of Methylated Ethylated acetylene carbamide

Into a suitable reaction vessel, equipped as before, there was introduced 142 parts (1 mol) of acetylene carbamide and 300 parts (4.4 mol) of aqueous formaldehyde (44%). The pH was adjusted to 7.5-8.0 with about 6 parts of 0.5 N NaOH solution. The reaction mixture was heated to 80° C. for 15 minutes. The pH of the reaction mixture was adjusted again with 0.5 N NaOH solution to about 7-7.5. The resultant pale yellow colored solution of tetramethylol acetylene carbamide was distilled at 50° C. under reduced pressure until the weight of the syrup in the reaction vessel was between about 305-310 parts. To this syrup, 160 parts (5 mol) of methanol and 6 parts of concentrated nitric acid was added at 50° C. There was a slight exotherm after the addition. The reaction temperature was held at about 55°-60° C. for 30 minutes and later cooled to 22° C. The resulting mixture was neutralized to a pH of 7-8 with a 20% NaOH solution and then slowly heated to 105° C. under reduced pressure to remove substantially all of the alcohol and water. To the resulting syrup, 92 parts (2 mol) of ethanol and 4 parts of nitric acid were added and the charge was heated to about 70° C. The reaction mixture was held at that temperature for 30 minutes. After cooling the reaction mixture to 22° C., it was neutralized to a pH of 7.5 using a 20% NaOH solution. The neutralized solution was heated slowly to 105° C. under reduced pressure, to remove all of the alcohol-water mixture. The resultant syrup was filtered hot at 80° C. to

remove inorganic salts and other impurities.

The yield of the syrup was 320 grams. The foil solids were 99.5 % and the product was soluble in water. The nuclear magnetic resonance analysis indicated that the ratio of methoxy to ethoxy groups in the product was 1:0.63, respectively, that is an average degree of methylation of about 2.4 and degree of ethylation 1.6.

The procedure for the preparation of the methylated ethylated acetylene carbamide was repeated in all essential details except that during the second alkylation step, 138 parts (3 mol) of ethanol were used. The final syrupy product was soluble in water. The foil solids were 99%. The nuclear magnetic resonance analysis indicated that the ratio of methoxy to ethoxy groups in the product was 1:0.81, respectively. The product was water-soluble and was also soluble in benzene.

Preparation of Methylated Butylated acetylene carbamide

The process for the preparation of the methylated ethylated acetylene carbamide set forth hereinabove was repeated in all essential details except that the methylolated acetylene carbamide was first reacted with 192 parts (6 mol) of methanol.

The second alkylation stage was accomplished with n-butanol as follows: To the syrup obtained after the methylation step there was added 74 parts (1 mol) of n-butanol and 1 part of nitric acid. The reaction mixture was heated to 105° C. for one-half hour. The distillate, which appeared to be methanol, was removed using a Dean-Stark trap. The pale yellow colored solution was cooled to 20° C. and neutralized to a pH of 7-7.5 with a 0.5 N NaOH solution. The unreacted butanol and any water in the reaction mixture were removed under reduced pressure at 121° C.

The resultant approximately 100% solids viscous liquid was analyzed by N.M.R. and found to have a methoxy:butoxy ratio of 1:0.32 respectively, that is an average degree of methylation of about 3, and degree of butylation 1.0. The product remained liquid and did not crystallize on storage at ambient temperature. The product was sparingly soluble in water but was soluble in benzene.

EXAMPLE 2

Preparation of microencapsulated clomazone

The following solutions were prepared:

A. A stock solution of polyvinyl alcohol, a 4% aqueous solution of which has a viscosity of 35 - 45 cp. at 20°C determined by Hoeppler falling ball method (Elvanol 50 - 42 G, ex. E. I DuPont de Nemours & Company) in warm water, formed by high speed stirring.

B. An amine solution having the following composition:

- 52.56 g. ethylene diamine
- 59.76 g. diethylenetriamine
- 92.16 g. sodium carbonate, anhydrous
- 54 g Sodium lignosulfonate
- 36 g Stabilizer
- 720 ml water

C. A water-immiscible organic phase, prepared just prior to use having the following composition:

- 720 g technical Clomazone
- 104.4 g tetrakis (methyoxymethyl) glycoluril (Powderlink 1174)
- 38.88 g. polymethylene polyphenylisocyanate (PAPI, ex. Upjohn Company)

2160 ml of 0.5% polyvinyl alcohol solution A was placed in a 2 liter baffled flask and stirred vigorously with a "Dispersator" unit (ex. Premier Mill Corporation) equipped with a 1 inch duplex head. The organic phase, solution C, was added, followed immediately by amine solution B. A paddle stirrer was substituted for the dispersion stirrer and the mixture was agitated slowly to maintain suspension for 2 hours. The microcapsules were recovered by vacuum filtration, washed with water to a neutral pH, and redispersed in water to produce a slurried product containing the equivalent of 61.2% active Clomazone.

COMPARATIVE EXAMPLE

For comparison purposes, a commercial clomazone concentrate (EC) was diluted and emulsified with water to provide a composition containing 36% active as a control.

Both formulations were applied to cotton plants in the greenhouse at a concentration of active ingredient of 1 lb/acre, using conventional spray equipment. Both formulations provided control against unwanted weeds, with the formulation of Example 1 being at least as effective as the commercially available EC formulation.

EXAMPLES 3 AND 4

Further formulations were prepared in accordance with the procedure set out in Example 2. The polymer content of the microcapsule shell and the amount of encapsulated herbicide solution were varied, as set out in Table 1 below.

Table 1

| | Component | Example 2 | Example 3 | Example 4 |
|---|---|---|---|---|
| Amine phase | Amine | 112 | 103 | 92 |
| | Sodium carbonate | 80 | 93 | 80 |
| | Surfactant | 54 | 54 | 54 |
| | Stabilizer | 36 | 36 | 36 |
| | Water | 670 | 700 | 670 |
| Orgainic phase | Clomazone | 720 | 720 | 720 |
| | Crosslinker | 104 | 70 | 120 |
| | Isocyanate | 40 | 38 | 46 |

EXAMPLE 5

This example sets forth certain biological data illustrating the efficacy of the microcapsule formulations of the present invention when compared to the efficacy of similar formulations known in the art.

Seeds of barnyardgrass, giant foxtail, green foxtail, shatter-cane, and velvetleaf were planted in a 25 cm×15 cm×7.5 cm fiber flat containing topsoil. Each species was planted as a single row in the flat, which contained five rows. There were four replicate flats of the aforementioned weed species for each rate of application of clomazone test formulation.

Stock solutions of each of the test formulations were prepared by dissolving a sufficient amount of formulation to provide 0.0356 grams of active ingredient in 40 mL of water. From the stock solution 20 mL was removed and serially diluted with 20 mL of water to provide application rates of 0.25, 0.125. 0.0625, 0.0313, 0.0156, and 0.0078 kg a.i./ha.

The solutions of test formulation for each rate of application were then sprayed onto the surface of the soil using a track-sprayer m a spray hood. Flats were also sprayed, using the procedure as set out above, with the same rates of a standard clomazone formulation sold as Command® Herbicide 4.0 Emulsifiable Concentrate (EC) (hereinafter referred to as the 'Standard Commercial Formulation'). Similarly, flats were also treated using the above procedure and employing the formulation of US 5,788,520.

Untreated controls were also included in each test.

Upon completion of the spraying, the flats were placed in a greenhouse, where they were maintained for fourteen days. After this time, the test was visually evaluated for percent weed control. The percent weed control data for each test formulation and the Standard Commercial Formulation was subjected to regression analysis to determine the rate of application that would provide 85% weed control (ED85) of each of the weed species. From these data the relative potency of the test formulation (taking the relative potency of the Standard Commercial Formulation as 1.0) was determined using the following ratio:

$$\text{Formulation Relative Potency} = \frac{\text{Formulation ED85}}{\text{Standard Commercial Formulation ED85}}$$

The results are set out in Table 2 below.

Table 2

| | Formulation Relative Potency | | | | |
|---|---|---|---|---|---|
| Formulation | Barnyard grass | Giant foxtail | Green foxtail | Shatter-cane | Velvetleaf |
| Example 1 | 1.09 | 1.21 | 1.13 | 0.97 | 1.2 |
| Example 2 | 1.0 | 1.32 | 1.07 | 1.11 | 1.26 |
| Example 3 | 0.97 | 1.22 | 1.1 | 1.20 | 1.32 |
| Formulation of US 5,783,520 | 0.4 | 0.45 | 0.56 | 0.44 | 0.34 |
| Standard Commercial Formulation | 1 | 1 | 1 | 1 | 1 |

The formulations of Examples 1, 2 and 3 of the present invention are generally equal in, if not more, herbicidally active than the standard Command Herbicide 4EC. The formulations of Example 1 to 3 are significantly more herbicidally active than the formulations of US 5,783,520.

In the above examples of the present invention, the lignosulfonate surfactant (REAX 88B) was obtained from Westvaco Corporation and had a nominal degree of sulfonation of about 3.8. The sulfonic acid groups were located both on aromatic rings and aliphatic side chains.

## Claims

1. A composition comprising clomazone encapsulated within microcapsules having a polymer wall comprising a cross-linked polyacetylene carbamide-polyurea; wherein the microcapsules are formed by interfacial polymerization reaction between a water immiscible organic phase comprising clomazone, one or more polyfunctional isocyanates and a cross-linking resin, and an aqueous phase comprising one or more polyfunctional amines.

2. The composition according to claim 1, wherein the isocyanate is selected from para-phenylene diisocyanate, meta-phenylene diisocyanate, naphthalene-1,5-diisocyanate, tetrachloro-m-phenylene diisocyanate, 2,4-toluene diisocyanate, 2,6-toluene diisocyanate, 4,4-diphenyl diisocyanate, the dichloro diphenyl methane diisocyanates, bibenzyl diisocyanate, bitolylene diisocyanate, the diphenyl ether diisocyanates, the dimethyldiphenyl diisocyanates, the polymethylene polyphenyl isocyanates, triphenylmethane-4,4',4"-triisocyan ate, isopropylbenzene $\alpha$-diisocyanate; and/or wherein the amine is selected from ethylene diamine, phenylene diamine, toluene diamine, hexamethylene diamine, diethylene triamine, piperazine, 1,3,5-benzenetriamine trihydrochloride, 2,4,6-triaminotoluene trihydrochloride, tetraethylene pentamine, pentaethylene hexamine, polyethylene imine, 1,3,6-triaminonaphthlene, 3,4,5-triamino-1,2,4-triazole, melamine, and 1,4,5,8-tetraminoanthraquinone.

3. The composition according to either of claims 1 or 2, wherein the polymer of the microcapsule wall is formed by including in the reaction mixture a cross-linking resin wherein the cross-linking resin is a glycoluril resin; more preferably wherein the glycoluril resin is formed by the condensation reaction of glycoluril and an aldehyde; still more preferably wherein the aldehyde is selected from formaldehyde, paraformaldehyde, acetaldehyde, butyraldehyde, paraldehyde, glyoxal, furfuraldehyde, propinonaldehyde, benzaldehyde, and mixtures thereof.

4. The composition according to claim 3, wherein the glycoluril resin is a highly alkylated/alkoxylated, partially alkylated/alkoxylated, or mixed alkylated/alkoxylated glycoluril resin; preferably wherein the glycoluril resin is an alkoxylated glycoluril resin having the general formula (1):

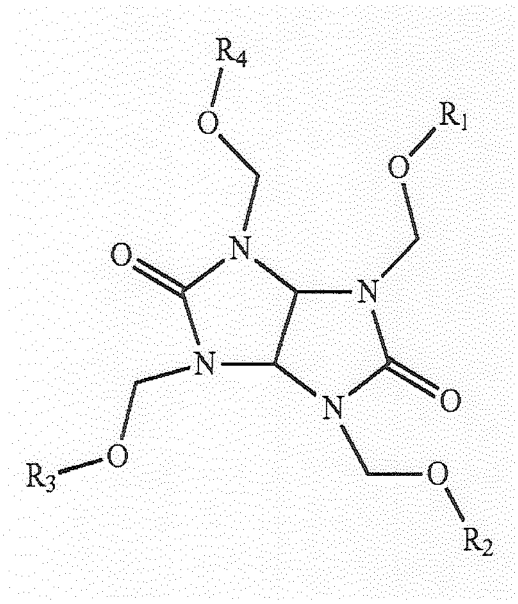

wherein $R_1$, $R_2$, $R_3$, and $R_4$ each independently represents a hydrogen atom or an alkyl group; especially wherein $R_1$, $R_2$, $R_3$, and $R_4$ each independently represents an alkyl group having from 1 to 12 carbon atoms.

**5.** The composition according to any of claims 1 to 4, wherein the reaction mixture comprises one or more surfactants, preferably wherein the surfactant comprises a salt of a sulfonic acid; and/or wherein the surfactant comprises a lignosulfonate.

**6.** The composition according to any of claims 1 to 5, wherein the reaction mixture comprises a neutralizing agent, preferably wherein the neutralizing agent is a metal carbonate; and/or wherein the reaction mixture comprises one or more stabilizers, preferably wherein the stabilizer comprises a clay; and/or wherein the reaction mixture comprises an emulsifier, preferably wherein the emulsifier is a polyvinyl alcohol.

**7.** The composition according to any preceding claim, wherein the polymer of the microcapsule wall is from 5 to 60 % cross-linked.

**8.** The composition according to any preceding claim, wherein the microcapsules have an average size of from 30 to 130 microns.

**9.** The composition according to any preceding claim, wherein the average thickness of the polymer wall of the microcapsules is from 0.5 to 4 microns.

**10.** The composition according to any preceding claim, wherein the weight ratio of clomazone to the polymer is from 2:1 to 10:1.

**11.** A method of preparing a microencapsulated clomazone composition, the method comprising:

providing a water imiscible organic phase comprising clomazone, one or more polyfunctional isocyanates and a cross-linking resin;
providing an aqueous phase comprising one or more polyfunctional amines;
dispersing the organic phase in the aqueous phase to form a dispersion of droplets of the organic phase in the aqueous; and
allowing the formation of a polyacetylene carbamide-polyurea polymer at the interface of the dispersed organic phase and the aqueous phase.

**12.** The method according to claim 11, wherein the isocyanate is selected from para-phenylene diisocyanate, meta-phenylene diisocyanate, naphthalene-1,5-diisocyanate, tetrachloro-m-phenylene diisocyanate, 2,4-toluene diisocyanate, 2,6-toluene diisocyanate, 4,4-diphenyl diisocyanate, the dichloro diphenyl methane diisocyanates, bibenzyl

diisocyanate, bitolylene diisocyanate, the diphenyl ether diisocyanates, the dimethyldiphenyl diisocyanates, the polymethylene polyphenyl isocyanates, triphenylmethane-4,4',4"-triisocyanate, isopropylbenzene $\alpha$-diisocyanate; and/or wherein the amine is selected from ethylene diamine, phenylene diamine, toluene diamine, hexamethylene diamine, diethylene triamine, piperazine, 1,3,5-benzenetriamine trihydrochloride, 2,4,6-triaminotoluene trihydrochloride, tetraethylene pentamine, pentaethylene hexamine, polyethylene imine, 1,3,6-triaminonaphthlene, 3,4,5-triamino-1,2,4-triazole, melamine, and 1,4,5,8-tetraminoanthraquinone; and/or wherein the cross-linking resin is a glycoluril resin, preferably wherein the glycoluril resin is formed by the condensation reaction of glycoluril and an aldehyde, more preferably wherein the aldehyde is selected from formaldehyde, paraformaldehyde, acetaldehyde, butyraldehyde, paraldehyde, glyoxal, furfuraldehyde, propinonaldehyde, benzaldehyde, and mixtures thereof; in particular wherein the glycoluril resin is a highly alkylated/alkoxylated, partially alkylated/alkoxylated, or mixed alkylated/alkoxylated glycoluril resin, preferably wherein the glycoluril resin is an alkoxylated glycoluril resin having the general formula (I):

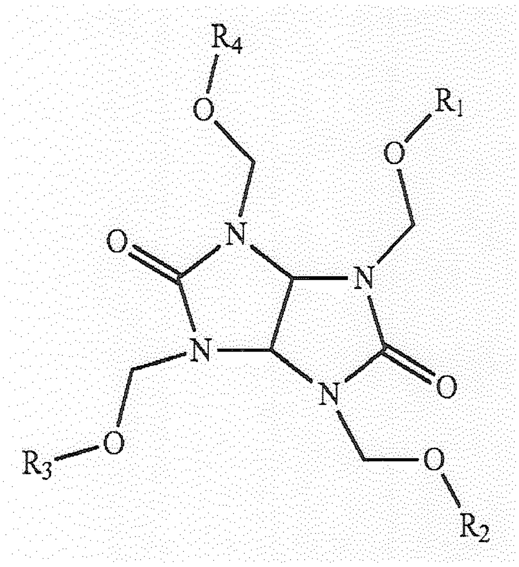

wherein $R_1$, $R_2$, $R_3$, and $R_4$ each independently represents a hydrogen atom or an alkyl group, more preferably wherein $R_1$, $R_2$, $R_3$, and $R_4$ each independently represents an alkyl group having from 1 to 12 carbon atoms.

**13.** The method according to either of claims 11 or 12, wherein the reaction mixture comprises one or more surfactants, preferably wherein the surfactant comprises a salt of a sulfonic acid and/or wherein the surfactant comprises a lignosulfonate; and/or wherein the reaction mixture comprises a neutralizing agent, preferably wherein the neutralizing agent is a metal carbonate; and/or wherein the reaction mixture comprises one or more stabilizers, preferably wherein the stabilizer comprises a clay; and/or wherein the reaction mixture comprises an emulsifier, preferably wherein the emulsifier is a polyvinyl alcohol.

**14.** A method for controlling plant growth at a locus, the method comprising applying to the locus a composition according to any of claims 1 to 10.

**15.** The use of a composition according to any of claims 1 to 10 in controlling plant growth.

**Patentansprüche**

**1.** Zusammensetzung, die Folgendes umfasst: Clomazon, das in Mikrokapseln mit einer Polymerwand eingekapselt ist, die aus einem vernetzten Polyacetylen-Carbamid-Polyharnstoff besteht; wobei die Mikrokapseln durch Grenzflächen-Polymerisationsreaktion zwischen einer mit Wasser nicht vermischbaren organischen Phase, die Clomazon, ein oder mehrere polyfunktionale Isocyanate und ein Vernetzungsharz enthält, und einer wässrigen Phase, die ein oder mehrere polyfunktionale Amine enthält, ausgebildet werden.

**2.** Zusammensetzung nach Anspruch 1, wobei das Isocyanat ausgewählt wird aus Para-Phenylendiisocyanat, Meta-Phenylendiisocyanat, Naphthalen-1,5-Diisocyanat, Tetrachlor-m-Phenylendiisocyanat, 2,4-Toluoldiisocyanat, 2,6-Toluoldiisocyanat, 4,4-Diphenyldiisocyanat, den Dichlor-Diphenylmethandiisocyanaten, Bibenzyldiisocyanat, Bitolylendiisocyanat, den Diphenyletherdiisocyanaten, den Dimethyldiphenyldiisocyanaten, den Polymethylenpolyphenylisocyanaten, Triphenylmethan-4,4',4"-Triisocyanat, Isopropylbenzol-a-Diisocyanat und/oder wobei das Amin ausgewählt wird aus Ethylendiamin, Phenylendiamin, Toluoldiamin, Hexamethylendiamin, Diethylentriamin, Piperazin, 1,3,5-Benzoltriamintrihydrochlorid, 2,4,6-Triamintoluoltrihydrochlorid, Tetraethylenpentamin, Pentaethylenhexamin, Polyethylenimin, 1,3,6-Triaminnaphthlen, 3,4,5-Triamin-1,2,4-Triazol, Melamin und 1,4,5,8-Tetraminanthrachinon.

3. Zusammensetzung nach einem der Ansprüche 1 oder 2, wobei das Polymer der Mikrokapselwand ausgebildet wird, indem in das Reaktionsgemisch ein Vernetzungsharz integriert wird, wobei das Vernetzungsharz ein Glycolurilharz ist; wobei das Glycolurilharz bevorzugt durch die Kondensationsreaktion von Glycoluril und einem Aldehyd ausgebildet wird; wobei das Aldehyd besonders bevorzugt gewählt wird aus Formaldehyd, Paraformaldehyd, Acetaldehyd, Butyraldehyd, Paraldehyd, Glyoxal, Furfuraldehyd, Propinonaldehyd, Benzaldehyd und Mischungen derselben.

4. Zusammensetzung nach Anspruch 3, wobei das Glycolurilharz ein hochalkyliertes/alkoxyliertes, teilweise alkyliertes/alkoxyliertes oder gemischtes alkyliertes/alkoxyliertes Glycolurilharz ist; wobei vorzugsweise das Glycolurilharz ein alkoxyliertes Glycolurilharz mit der allgemeinen Formel (I) ist:

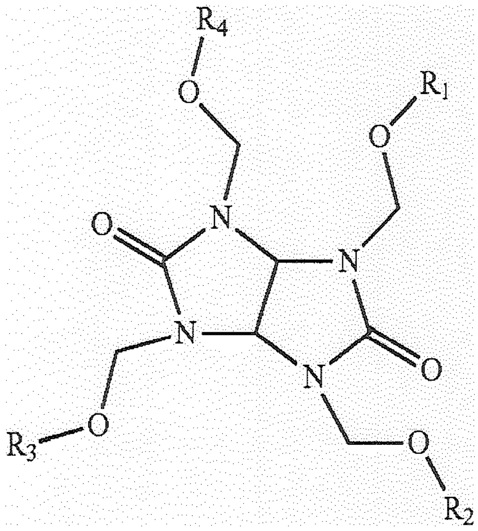

wobei gilt: $R_1$, $R_2$, $R_3$ und $R_4$ stellen jeweils unabhängig ein Wasserstoffatom oder eine Alkylgruppe dar; wobei insbesondere $R_1$, $R_2$, $R_3$ und $R_4$ jeweils unabhängig eine Alkylgruppe mit 1 bis 12 Kohlenstoffatomen darstellen.

5. Zusammensetzung nach einem der Ansprüche 1 bis 4, wobei das Reaktionsgemisch einen oder mehrere grenzflächenaktive Stoffe umfasst, wobei der grenzflächenaktive Stoff bevorzugt ein Salz einer Sulfonsäure enthält und/oder wobei der grenzflächenaktive Stoff ein Ligninsulfonat enthält.

6. Zusammensetzung nach einem der Ansprüche 1 bis 5, wobei das Reaktionsgemisch ein Neutralisationsmittel enthält, wobei das Neutralisationsmittel bevorzugt ein Metallcarbonat ist bzw. wobei das Reaktionsgemisch einen oder mehrere Stabilisatoren enthält, wobei der Stabilisator bevorzugt einen Ton enthält bzw. wobei das Reaktionsgemisch einen Emulgator enthält, wobei der Emulgator bevorzugt ein Polyvinylalkohol ist.

7. Zusammensetzung nach einem der vorangehenden Ansprüche, wobei das Polymer der Mikrokapselwand zwischen 5 und 60 % vernetzt ist.

8. Zusammensetzung nach einem der vorhergehenden Ansprüche, wobei die Mikrokapseln eine durchschnittliche Größe zwischen 30 und 130 Mikron aufweisen.

9. Zusammensetzung nach einem der vorhergehenden Ansprüche, wobei die durchschnittliche Dicke der Polymerwand der Mikrokapseln zwischen 0,5 und 4 Mikron beträgt.

10. Zusammensetzung nach einem der vorhergehenden Ansprüche, wobei das Gewichtsverhältnis des Clomazon zum

Polymer zwischen 2:1 und 10:1 beträgt.

**11.** Verfahren zum Herstellen der mikroverkapselten Clomazon-Zusammensetzung, wobei das Verfahren Folgendes umfasst:

Bereitstellen einer nicht mit Wasser vermischbaren Phase, die Clomazon, ein oder mehrere polyfunktionale Isocyanate und ein Vernetzungsharz enthält;
Bereitstellen einer wässrigen Phase, die ein oder mehrere polyfunktionale Amine enthält; Dispergieren der organischen Phase in der wässrigen Phase, um eine Dispersion der Tröpfchen der organischen Phase in der wässrigen Phase auszubilden, und
Zulassen der Ausbildung eines Polyacetylen-Carbamid-Polyharnstoffs an der Grenzfläche der dispergierten organischen Phase und der wässrigen Phase.

**12.** Verfahren nach Anspruch 11, wobei das Isocyanat ausgewählt wird aus Para-Phenylendiisocyanat, Meta-Phenylendiisocyanat, Naphthalen-1,5-Diisocyanat, Tetrachlor-m-Phenylendiisocyanat, 2,4-Toluol-diisocyanat, 2,6-Toluoldiisocyanat, 4,4-Diphenyldiisocyanat, den Dichlor-Diphenylmethandiisocyanaten, Bibenzyldiisocyanat, Bitolylendiisocyanat, den Diphenyletherdiisocyanaten, den Dimethyldiphenyldiisocyanaten, den Polymethylenpolyphenylisocyanaten, Triphenylmethan-4,4',4"-Triisocyanat, Isopropylbenzol-a-Diisocyanat und/oder wobei das Amin ausgewählt wird aus Ethylendiamin, Phenylendiamin, Toluoldiamin, Hexamethylendiamin, Diethylentriamin, Piperazin, 1,3,5-Benzoltriamintrihydrochlorid, 2,4,6-Triamintoluoltrihydrochlorid, Tetraethylenpentamin, Pentaethylenhexamin, Polyethylenimin, 1,3,6-Triaminnaphthlen, 3,4,5-Triamin-1,2,4-Triazol, Melamin und 1,4,5,8-Tetraminanthrachinon; und/oder wobei das Vernetzungsharz ein Glycoluril-Harz ist, wobei das Glycolurilharz bevorzugt durch die Kondensationsreaktion von Glycoluril und einem Aldehyd ausgebildet wird; wobei das Aldehyd besonders bevorzugt gewählt wird aus Formaldehyd, Paraformaldehyd, Acetaldehyd, Butyraldehyd, Paraldehyd, Glyoxal, Furfuraldehyd, Propinonaldehyd, Benzaldehyd und Mischungen derselben; wobei das Glycolurilharz insbesondere ein hoch-alkyliertes/alkoxyliertes, teilweise alkyliertes/alkoxyliertes oder gemischtes alkyliertes/alkoxyliertes Glycolurilharz ist; wobei vorzugsweise das Glycolurilharz ein alkoxyliertes Glycolurilharz mit der allgemeinen Formel (I) ist:

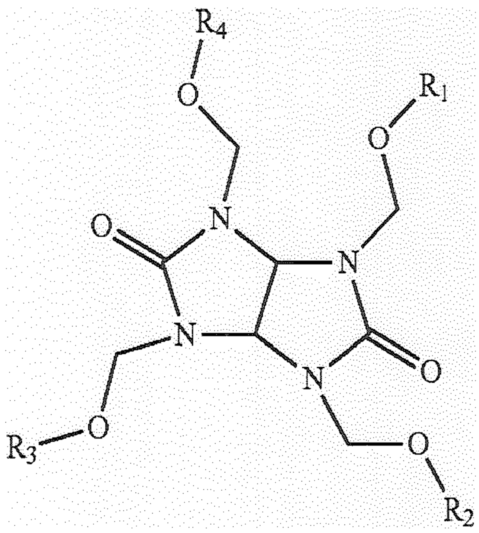

wobei gilt: $R_1$, $R_2$, $R_3$ und $R_4$ stellen jeweils unabhängig ein Wasserstoffatom oder eine Alkylgruppe dar; wobei $R_1$, $R_2$, $R_3$ und $R_4$ besonders bevorzugt jeweils unabhängig eine Alkylgruppe mit 1 bis 12 Kohlenstoffatomen darstellen.

**13.** Verfahren nach einem der Ansprüche 11 oder 12, wobei das Reaktionsgemisch einen oder mehrere grenzflächenaktive Stoffe umfasst, wobei der grenzflächenaktive Stoff bevorzugt ein Salz einer Sulfonsäure enthält und/oder wobei der grenzflächenaktive Stoff ein Ligninsulfonat enthält; und/oder wobei das Reaktionsgemisch ein Neutralisationsmittel enthält, wobei das Neutralisationsmittel bevorzugt ein Metallcarbonat ist; und/oder wobei das Reaktionsgemisch einen oder mehrere Stabilisatoren enthält, wobei der Stabilisator bevorzugt einen Ton enthält; und/oder wobei das Reaktionsgemisch einen Emulgator enthält, wobei der Emulgator bevorzugt ein Polyvinylalkohol ist.

**14.** Verfahren zum Steuern des Pflanzenwachstums an einem Locus, wobei das Verfahren die Verwendung einer Zusammensetzung nach einem der Ansprüche 1 bis 10 am Locus umfasst.

15. Verwenden einer Zusammensetzung nach einem der Ansprüche 1 bis 10 zum Steuern des Pflanzenwachstums.

**Revendications**

1. Composition comprenant du clomazone encapsulé dans des microcapsules ayant une paroi polymère comprenant une polyurée-carbamide polyacétylène réticulée ; dans laquelle les microcapsules sont formées par réaction de polymérisation interfaciale entre une phase organique non miscible dans l'eau comprenant du clomazone, un ou plusieurs isocyanates polyfonctionnels et une résine de réticulation, et une phase aqueuse comprenant une ou plusieurs amines polyfonctionnelles.

2. Composition selon la revendication 1, dans laquelle l'isocyanate est sélectionné parmi le para-phénylène diisocyanate, méta-phénylène diisocyanate, naphtalène-1,5-diisocyanate, tétrachloro-m-phénylène diisocyanate, 2,4-toluène diisocyanate, 2,6-toluène diisocyanate, 4,4-diphényl diisocyanate, les dichlorodiphénylméthane diisocyanates, bibenzyl diisocyanate, bitolylène diisocyanate, les diphényléther diisocyanates, les diméthyldiphényl diisocyanates, les polyméthylène-polyphényl isocyanates, triphénylméthane-4,4',4"-triisocyanate, isopropylbenzène $\alpha$-diisocyanate ; et/ou dans laquelle l'amine est sélectionnée parmi l'éthylène diamine, phénylène diamine, toluène diamine, hexaméthylène diamine, diéthylène triamine, pipérazine, trichlorhydrate de 1,3,5-benzènetriamine, trichlorhydrate de 2,4,6-triaminotoluène, tetraéthylène pentamine, pentaéthylène hexamine, polyéthylène imine, 1,3,6-triaminonaphtalène, 3,4,5-triamino-1,2,4-triazole, mélamine et 1,4,5,8-tétraminoanthraquinone.

3. Composition selon l'une quelconque des revendications 1 ou 2, dans laquelle le polymère de la paroi de microcapsule est formé en incluant une résine de réticulation dans le mélange de réaction, dans laquelle la résine de réticulation est une résine de glycolurile ; de préférence, dans laquelle la résine de glycolurile est formée par la réaction de condensation du glycolurile et d'un aldéhyde; plus préférablement, dans laquelle l'aldéhyde est sélectionné parmi le formaldéhyde, paraformaldéhyde, acétaldéhyde, butyraldéhyde, paraldéhyde, glyoxal, furfuraldéhyde, propinonaldéhyde, benzaldéhyde, et des mélanges de ceux-ci.

4. Composition selon la revendication 3, dans laquelle la résine de glycolurile est une résine de glycolurile fortement alkylée/alcoxylée, partiellement alkylée/alcoxylée ou alkylée/alcoxylée mixte ; de préférence, dans laquelle la résine de glycolurile est une résine de glycolurile alcoxylée de formule générale (I) :

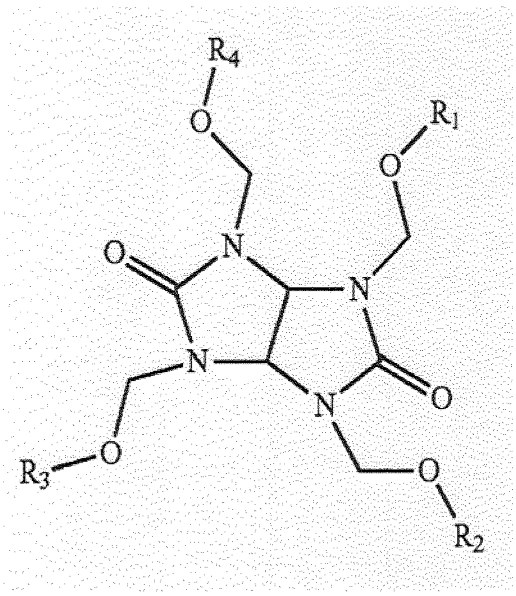

où $R_1$, $R_2$, $R_3$ et $R_4$ représentent chacun indépendamment un atome d'hydrogène ou un groupe alkyle ; en particulier, où $R_1$, $R_2$, $R_3$ et $R_4$ représentent chacun indépendamment un groupe alkyle comprenant entre 1 et 12 atomes de carbone.

5. Composition selon l'une quelconque des revendications 1 à 4, dans laquelle le mélange de réaction comprend un ou plusieurs agents de surface, l'agent de surface comprenant, de préférence, un sel d'acide sulfonique ; et/ou dans

laquelle l'agent de surface comprend un lignosulfonate.

6. Composition selon l'une quelconque des revendications 1 à 5, dans laquelle le mélange de réaction comprend un agent neutralisant, l'agent neutralisant étant, de préférence, un carbonate de métal; et/ou dans laquelle le mélange de réaction comprend un ou plusieurs stabilisants, le stabilisant comprenant, de préférence, une argile; et/ou dans laquelle le mélange de réaction comprend un émulsifiant, l'émulsifiant étant, de préférence, un alcool polyvinylique.

7. Composition selon l'une quelconque des revendications précédentes, dans laquelle le polymère de la paroi de microcapsule est réticulé entre 5 et 60 %.

8. Composition selon l'une quelconque des revendications précédentes, dans laquelle les microcapsules ont une taille moyenne comprise entre 30 et 130 microns.

9. Composition selon l'une quelconque des revendications précédentes, dans laquelle l'épaisseur moyenne de la paroi polymère des microcapsules est comprise entre 0,5 et 4 microns.

10. Composition selon l'une quelconque des revendications précédentes, dans laquelle le rapport pondéral entre le clomazone et le polymère est compris entre 2:1 et 10:1.

11. Procédé de préparation d'une composition de clomazone microencapsulée, le procédé comprenant les étapes suivantes :

fournir une phase organique non miscible dans l'eau comprenant du clomazone, un ou plusieurs isocyanates polyfonctionnels et une résine de réticulation ;
fournir une phase aqueuse comprenant une ou plusieurs amines polyfonctionnelles ;
disperser la phase organique dans la phase aqueuse pour former une dispersion de gouttelettes de la phase organique dans la phase aqueuse ; et
permettre la formation d'un polymère de polyurée-carbamide polyacétylène au niveau de l'interface de la phase organique dispersée et de la phase aqueuse.

12. Procédé selon la revendication 11, dans laquelle l'isocyanate est sélectionné parmi le para-phénylène diisocyanate, méta-phénylène diisocyanate, naphtalène-1,5-diisocyanate, tétrachloro-m-phénylène diisocyanate, 2,4-toluène diisocyanate, 2,6-toluène diisocyanate, 4,4-diphényl diisocyanate, les dichlorodiphénylméthane diisocyanates, bibenzyl diisocyanate, bitolylène diisocyanate, les diphényléther diisocyanates, les diméthyldiphényl diisocyanates, les polyméthylène-polyphényl isocyanates, triphénylméthane-4,4',4"-triisocyanate, isopropylbenzène $\alpha$-diisocyanate ; et/ou dans laquelle l'amine est sélectionnée parmi l'éthylène diamine, phénylène diamine, toluène diamine, hexaméthylène diamine, diéthylène triamine, pipérazine, trichlorhydrate de 1,3,5-benzènetriamine, trichlorhydrate de 2,4,6-triaminotoluène, tetraéthylène pentamine, pentaéthylène hexamine, polyéthylène imine, 1,3,6-triaminonaphtalène, 3,4,5-triamino-1,2,4-triazole, mélamine et 1,4,5,8-tétraminoanthraquinone ; et/ou dans laquelle la résine de réticulation est une résine de glycolurile ; de préférence, dans laquelle la résine de glycolurile est formée par la réaction de condensation du glycolurile et d'un aldéhyde; plus préférablement, dans laquelle l'aldéhyde est sélectionné parmi le formaldéhyde, paraformaldéhyde, acétaldéhyde, butyraldéhyde, paraldéhyde, glyoxal, furfuraldéhyde, propinonaldéhyde, benzaldéhyde, et des mélanges de ceux-ci; en particulier, dans laquelle la résine de glycolurile est une résine de glycolurile fortement alkylée/alcoxylée, partiellement alkylée/alcoxylée ou alkylée/alcoxylée mixte ; de préférence, dans laquelle la résine de glycolurile est une résine de glycolurile alcoxylée de formule générale (I) :

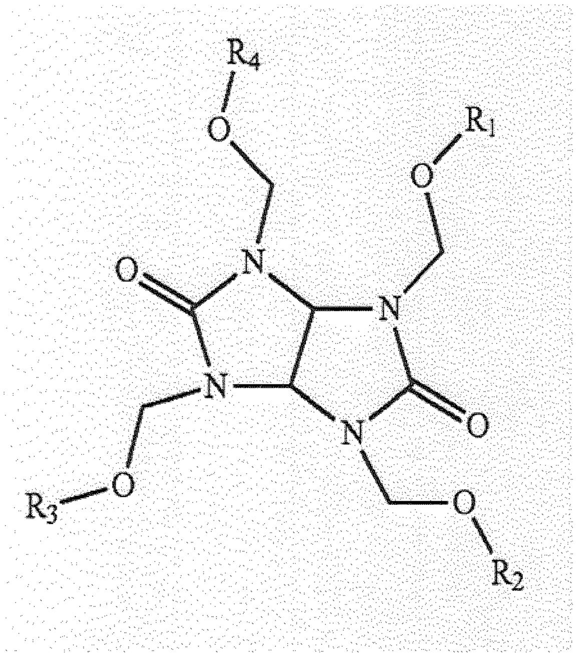

où $R_1$, $R_2$, $R_3$ et $R_4$ représentent chacun indépendamment un atome d'hydrogène ou un groupe alkyle ; plus préférablement, où $R_1$, $R_2$, $R_3$ et $R_4$ représentent chacun indépendamment un groupe alkyle comprenant entre 1 et 12 atomes de carbone.

**13.** Procédé selon l'une quelconque des revendications 11 à 12, dans laquelle le mélange de réaction comprend un ou plusieurs agents de surface, l'agent de surface comprenant, de préférence, un sel d'acide sulfonique, et/ou dans laquelle l'agent de surface comprend un lignosulfonate; dans laquelle le mélange de réaction comprend un agent neutralisant, l'agent neutralisant étant, de préférence, un carbonate de métal ; et/ou dans laquelle le mélange de réaction comprend un ou plusieurs stabilisants, le stabilisant comprenant, de préférence, une argile; et/ou dans laquelle le mélange de réaction comprend un émulsifiant, l'émulsifiant étant, de préférence, un alcool polyvinylique.

**14.** Procédé de contrôle de croissance végétale dans un locus, le procédé comprenant l'étape consistant à appliquer dans ce locus une composition selon l'une quelconque des revendications 1 à 10.

**15.** Utilisation d'une composition selon l'une quelconque des revendications 1 à 10, afin de contrôler la croissance végétale.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5597780 A
- US 5583090 A
- US 5783520 A
- EP 1840145 A
- US 3577515 A
- US 2011026903 A
- US 3426004 A
- US 5788520 A